# EUROPÄISCHE PATENTSCHRIFT

(11) **EP 3 634 170 B1**
(45) Veröffentlichungstag und Bekanntmachung des Hinweises auf die Patenterteilung: **19.07.2023**
(21) Anmeldenummer: 18727028.5
(22) Anmeldetag: 04.06.2018
(51) Int. Cl.: A45B 9/00

(54) **KLEMMVORRICHTUNG FÜR EINEN LÄNGENVERSTELLBAREN STOCK**
CLAMPING DEVICE FOR A LONGITUDINALLY ADJUSTABLE POLE
DISPOSITIF DE SERRAGE POUR UN BÂTON AJUSTABLE EN LONGUEUR

(30) Priorität: 06.06.2017 CH 7202017
(43) Veröffentlichungstag der Anmeldung: 15.04.2020
(73) Patentinhaber: Lekisport AG, 6340 Baar (CH)
(72) Erfinder: HEIM, Eberhard, 72669 Unterensingen (DE)
(74) Vertreter: Bremi, Tobias Hans
(86) Internationale Anmeldenummer: PCT/EP2018/064559
(87) Internationale Veröffentlichungsnummer: WO 2018/224417

(56) Entgegenhaltungen:
- WO-A1-2013/020861
- DE-U1-202004 002 426
- FR-A1- 2 526 281
- KR-A- 20170 018 227

## Beschreibung

### TECHNISCHES GEBIET

Die vorliegende Erfindung betrifft das Gebiet der Stöcke für das Wandern, Nordic Walking, aber auch im weitesten Sinne für andere Sportarten wie beispielsweise Langlauf oder Alpin-Skilauf, Alpinismus etc.

### STAND DER TECHNIK

Insbesondere, aber nicht ausschliesslich, aus dem Gebiet des Wanderns resp. Nordic Walkings sind Stockkonstruktionen bekannt, welche in ihrer Länge verstellbar sind. Die Verstellbarkeit kann dabei einerseits dafür genutzt werden, dass die Länge des Stockes auf die Bedürfnisse angepasst eingestellt werden kann, und andererseits aber auch dazu, den Stock auf ein so klein wie mögliches Packmass zu reduzieren, d.h. die Länge derart stark verkleinerbar auszugestalten, dass der Stock beispielsweise in einem Rucksack oder ähnlichem verstaut werden kann. Solche Konstruktionen, bei welchen sogenannte Innenrohre mit geringem Durchmesser verschieblich in einem Aussenrohr mit einem etwas grösseren Durchmesser gelagert sind, und bei welchen die Relativposition der Rohrabschnitte durch einen Feststellmechanismus festgelegt werden kann, sind beispielsweise bekannt aus der DE 297 06 849 oder aber auch aus der DE 497 08 829 oder der EP 1 450 906.

Bei der Verwendung von solchen Konstruktionen ist es zwingend, dass die einzelnen Rohrabschnitte unterschiedlichen Durchmesser haben, und zudem muss sichergestellt sein, damit insbesondere das geringe Packmass erreicht werden kann, dass die Rohre auch wirklich weitgehend ineinander verschoben werden können.

Damit kann es vorkommen, dass der Stock insbesondere im unteren Bereich, wo typischerweise das dünnste Rohr angeordnet wird, sehr dünn wird, und damit für manche Anwendungen nicht mehr genügend Eigensteifigkeit aufweist, zudem sind die in diesen Dokumenten offenbarten Konstruktionen häufig vom Benutzer nicht ganz so gern gesehen, da die Relativposition der einzelnen Stockrohrabschnitte durch ein Verdrehen dieser Stockrohrabschnitte relativ zu einander sichergestellt werden muss, wozu entsprechende manuell aufzubringende Drehkräfte erforderlich sind.

Alternative Mechanismen, bei welchen die relative Festlegung der axialen Position von unterschiedlichen Rohrabschnitten nicht durch einen innen liegenden Feststellmechanismus realisiert ist, sind beispielsweise aus der WO 2010/085905 bekannt, oder aber auch aus der DE 694 01 765 oder der EP 1 217 224 resp. der EP 098 898, diese aussen liegenden Konstruktionen sind aber häufig nicht dafür geeignet, mehr als zwei Stockrohre verschieblich ineinander zu lagern, wodurch dann auch kein genügend kleines Packmass resultiert.

Aus einem völlig anderen Gebiet, nämlich aus dem Gebiet der Schirmständer, ist aus der DE202004002426 ein Klemmmechanismus bekannt, bei welchem ein zweiteiliger Klemmhebel mit einem Gelenk an einer Manschette befestigt ist, und bei welchem der vordere Arm des Klemmhebels in Form eines Stiftes ausgebildet ist, der so gelagert ist, dass er sich nur senkrecht zur Ständerachse bewegen kann und in ein Loch in einem Innenohr eingreifen kann.

Das Dokument KR 2017 0018227 A offenbart einen Gehstock mit einer Klemmvorrichtung, welche eine Manschette umfasst.

### DARSTELLUNG DER ERFINDUNG

Es ist entsprechend Aufgabe eine verbesserte Klemmvorrichtung bei einem Wanderstock, Trekkingstock, Nordic Walking-Stock, Langlaufstock oder Skistock zur formschlüssigen lösbaren axialen Festlegung eines in eine Öffnung der an einem Aussenrohr befestigten Klemmvorrichtung einschiebbaren Innenrohrabschnittes bereitzustellen, insbesondere für Faltstöcke, die mit einem elastischen Zugseil gespannt werden.

Der vorgeschlagene Stock mit Klemmvorrichtung weist eine umlaufende Kunststoffmanschette auf, an welcher aussenseitig ein Klemmhebel über eine Achse, welche senkrecht zur Stockachse angeordnet ist, kippbar gegen die Rückstellkraft eines Federelements angeachst ist.

Der Klemmhebel kann aus Metall oder einem Kunststoff bestehen, ggf. in faserverstärkter Form, oder aus einer Kombination dieser Werkstoffe.

Die Kunststoffmanschette weist weiter zwei Vorsprünge mit Durchtrittsöffnungen und/oder Ausnehmungen für die Achse auf, und der Klemmhebel ist zwischen diesen Vorsprüngen kippbar um die Achse gelagert.

Weiter verfügt die Kunststoffmanschette über eine radiale Durchgangsöffnung, dazu vorgesehen, dass der Klemmhebel mit einem Ende durch diese Durchgangsöffnung hindurch treten kann.

Der Klemmhebel weist einen ersten Hebelarm mit einem von aussen zugänglichen Druckbereich zum Lösen der Klemmvorrichtung auf und einen auf der anderen Seite der Achse angeordneten zweiten Hebelarm. Der zweite Hebelarm verfügt über einen im wesentlichen radial zur Stockachse angeordneten Klemmvorsprung, welcher durch die radiale Durchgangsöffnung in der Kunststoffmanschette in eine axiale Durchgangsöffnung der Kunststoffmanschette eingreift und formschlüssig in eine Nut des Innenrohres oder eines mit dem Innenohr verbundenen Führungseinschubs für die axiale Festlegung der beiden Rohre eingreift.

Vorzugsweise ist dieser kleine Mechanismus selbsteinrastend ausgebildet.

Der Klemmhebel kann streifenförmig ausgebildet sein, z.B. mit einer Breite entlang der Achse von wenigstens 2 mm, vorzugsweise wenigstens 4 mm, insbesondere bevorzugt im Bereich von 4-12 mm.

Weiter kann der zweite Hebelarm einen im Wesentlichen radial zur Stockachse angeordneten, streifenförmigen Klemmvorsprung aufweisen, welcher durch die radiale längliche Durchgangsöffnung in der Kunststoffmanschette in eine axiale Durchgangsöffnung der Kunststoffmanschette eingreift und formschlüssig in eine teilweise umlaufende Nut des Innenrohres oder eines mit dem Innenohr verbundenen Führungseinschubs für die axiale Festlegung der beiden Rohre eingreift.

Es kann mehrere Nuten des Innenrohres oder eines mit dem Innenohr verbundenen Führungseinschubs geben, um die Länge unterschiedlich einzustellen. Vorzugsweise gibt es 1, 2, 3 oder 4 Nuten des Innenrohres oder eines mit dem Innenohr verbundenen Führungseinschubs.

Eine erste bevorzugte Ausführungsform ist dadurch gekennzeichnet, dass die Klemmvorrichtung weiter ein (auf der dem Klemmhebel gegenüberliegenden Seite) umlaufendes Metallband aufweist, welches jeweils auf der Aussenseite der zwei Vorsprünge, jeweils mit einer Durchgangsöffnung für die Achse, durch die die Achse auch hindurchtritt, angeordnet ist und den den Vorsprüngen abgewandten Umfang der Klemmmanschette umlaufend angeordnet ist.

Das Metallband kann dabei in einer Vertiefung, vorzugsweise in einer umlaufenden Vertiefung der Kunststoffmanschette angeordnet sein.

Das Metallband hat vorzugsweise eine Breite, parallel zur Stockachse, wenigstens im Umlaufbereich im Bereich von 4-15 mm, vorzugsweise im Bereich von 5-10 mm. Bevorzugtermassen besteht das Metallband aus rostfreiem Stahl oder einer anderen rostfreien Metalllegierung.

Bevorzugtermassen ist das Metallband und/oder der Klemmhebel ein aus Metall vorzugsweise in einem Stanz- und Umform-Verfahren oder einem Druckgussverfahren hergestelltes Bauteil. Der Klemmhebel kann, wenn aus Kunststoff, genau wie die Manschette, auch in einem Spritzgussverfahren hergestellt sein.

Die Kunststoffmanschette ihrerseits besteht vorzugsweise aus einem thermoplastischen Kunststoff, beispielsweise Polyethylen, Polypropylen, PET, Polyurethan, Polyamid, Polycarbonat, oder einer Mischung dieser Werkstoffe, wobei die Werkstoffe verstärkt sein können, insbesondere mit Glasfasern. Die Kunststoffmanschette wird typischerweise in einem Spritzgussverfahren hergestellt.

Der Klemmhebel weist vorzugsweise in Blickrichtung der Achse ein im wesentlichen L-förmiges Profil auf, dessen unterer horizontaler Schenkel mit seinem freiliegenden Ende den Klemmvorsprung bildet, und dessen oberer vertikaler Schenkel den Druckbereich bereitstellt. An den beiden den Vorsprüngen zugewandten Randbereichen zum Rohr sind vorzugsweise umgelegte Bereiche vorgesehen, welche jeweils eine Durchgangsöffnung für die Achse aufweisen, und welche im Wesentlichen parallel zur Hauptverlaufsrichtung der Vorsprünge verlaufen.

Der Klemmvorsprung verfügt bevorzugtermassen über einen gekrümmten Bereich, vorzugsweise mit einer im wesentlichen kreisbogenförmigen Kontur, insbesondere vorzugsweise angepasst an den Durchmesser der Nut, welche ihrerseits vorzugsweise wenigstens umlaufend und kreisbogenförmig ausgebildet ist.

Der Klemmvorsprung hat bevorzugtermassen eine Breite, senkrecht zur Stockachse, im Bereich von 2-10 mm, vorzugsweise im Bereich von 3-7 mm.

Der Klemmhebel hat vorzugsweise eine Breite, senkrecht zur Stockachse, im Bereich von 4-15 mm, vorzugsweise im Bereich von 8-12 mm.

Die Rückstellkraft des Klemmhebels wird bevorzugtermassen über ein Federelement in Form einer Spiralfeder mit zwei Schenkeln bereitgestellt, wobei vorzugsweise die Achse durch die Öffnung des Spiralbereichs des Federelements hindurchtritt, und ein erster Schenkel auf einer Aussenfläche der Kunststoffmanschette und ein zweiter Schenkel auf einer Innenfläche des Klemmhebels anliegt, vorzugsweise auf der dem Druckbereich gegenüberliegenden Innenfläche des Klemmhebels.

Es kann ein am Innenohr befestigter Führungseinschub vorgesehen sein, der mit einem ersten Bereich in einen Innenraum des Innenrohres eingreift und in diesem befestigt ist, und der mit einem zweiten Bereich über das Ende des Innenrohres hervorsteht und in den Innenraum des Aussenrohres eingreift, wobei vorzugsweise der Aussendurchmesser des zweiten Bereichs im wesentlichen gleich oder nur unwesentlich geringer ist als der Innendurchmesser des Innenraums des Aussenrohres, und wobei im dem Innenohr zugewandten Drittel oder Viertel des zweiten Bereichs wenigstens eine bevorzugt umlaufende Nut für den Klemmvorsprung vorgesehen ist.

Der erste Hebelarm mit dem von aussen zugänglichen Druckbereich zum Lösen der Klemmvorrichtung und der auf der anderen Seite der Achse angeordnete zweite Hebelarm des Klemmhebels sind nach der Erfindung einstückig und starr ausgebildet.

Der Klemmhebel kann als Ganzes einstückig aus einem Kunststoffmaterial, vorzugsweise mit Faserverstärkung, gespritzt sein oder aus Metall und aus einem Blechabschnitt gestanzt und umgeformt oder als Druckgussteil ausgebildet sein. Weiter betrifft die vorliegende Erfindung einen Wanderstock, Trekkingstock, Nordic Walking-Stock, Langlaufstock oder Skistock mit einer Klemmvorrichtung, wie sie oben beschrieben und in den Ansprüchen definiert ist.

Der Stock hat vorzugsweise wenigstens ein Aussenrohr mit daran befestigter Klemmvorrichtung und wenigstens ein Innenrohr, sowie vorzugsweise zusätzlich einen bevorzugtermassen am Aussenrohr befestigten Handgriff und bevorzugt am Innenrohr oder an einem mit diesem direkt oder indirekt verbundenen weiteren Rohrabschnitt mit gleichem oder geringerem Durchmesser als das Innenrohr eine Stockspitze.

Ein solcher Stock kann dadurch gekennzeichnet sein, dass es sich um einen Faltstock mit wenigstens drei, vorzugsweise wenigstens vier Rohrabschnitten handelt, wobei die einzelnen Abschnitte über ein elastisches Zugelement miteinander verbunden sind. Vorzugsweise sind die Rohrabschnitte im zusammengesetzten Zustand des Faltstockes über Steckverbindungen entlang der Stockachse ausgerichtet miteinander verbunden, und wenigstens zwei Rohrabschnitte im zusammengefalteten Zustand nur noch über ein bewegliches Verbindungselement miteinander verbunden sind, und wobei an einem obersten Rohrabschnitt ein Stockgriff angeordnet ist und an einem untersten Rohrabschnitt eine Stockspitze angeordnet ist. Eine der Steckverbindungen ist über den Klemmmechanismus realisiert, wobei der Klemmmechanismus an einem ersten Rohrabschnitt befestigt ist, und bei welchem ein zweiter Rohrabschnitt, der über einen geringeren oder nahezu gleichen Außendurchmesser verfügt wie der Innendurchmesser des ersten Rohrabschnitts, und der im ersten Rohrabschnitt an sich verschieblich gelagert ist, in der relativen axialen Position durch den außen liegenden Klemmmechanismus fixiert werden kann.

Die weiteren Steckverbindungen können als reine Steckverbindungen ausgebildet sein, bei welchen Rohrabschnitte in zusammen gestecktem Zustand nur in einer axialen Richtung fixiert sind.

Die Rohrabschnitte können über wenigstens ein vorzugsweise wenigstens bereichsweise elastisches Zugseil miteinander verbunden sein, welches zum Beispiel am untersten Rohrabschnitt befestigt ist und am obersten Rohrabschnitt befestigt ist und durch den Innenraum der wenigstens zwei mittleren Rohrabschnitte verlaufend angeordnet ist.

Der Faltstock kann derart ausgebildet sein, dass er vom zusammengefalteten Zustand in den zusammengesetzten Zustand übergeführt werden kann, indem die weiteren Steckverbindungen zusammengesteckt werden, und indem anschließend bei gelöstem Klemmmechanismus der zweite Rohrabschnitt so weit aus dem ersten Rohrabschnitt herausgezogen wird, bis das Zugseil unter Spannung ist, und indem der außen liegende Klemmmechanismus, bevorzugt selbsteinrastend, fixiert wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Klemmvorrichtung mit Stockrohren in verschiedenen Ansichten, namentlich in a) eine perspektivische Ansicht, in b) eine Ansicht auf den Schwenkhebel-Bereich und in c) einen Schnitt entlang der Linie A-A in Figur 1b;
- Fig. 2: die Klemmvorrichtung in einer perspektivischen Explosionsdarstellung;
- Fig. 3: die Klemmvorrichtung in einer Explosionsdarstellung im Schnitt;
- Fig. 4: eine perspektivische Explosionsdarstellung;
- Fig. 5: die Klemmvorrichtung ohne Stockrohre in verschiedenen Ansichten, namentlich in a) in einer Ansicht von oben, d. h. von der Seite des Rohres mit grösserem Querschnitt; in b) in einer Ansicht von unten, d. h. von der Seite des Rohres mit kleinerem Querschnitt; in c) in einer Seitenansicht; in d) in einer perspektivischen Darstellung mit Blick in die Durchgangsöffnung von oben; und in d) in einer perspektivischen Darstellung mit Blick in die Durchgangsöffnung von unten.

### BESCHREIBUNG BEVORZUGTER AUSFÜHRUNGSFORMEN

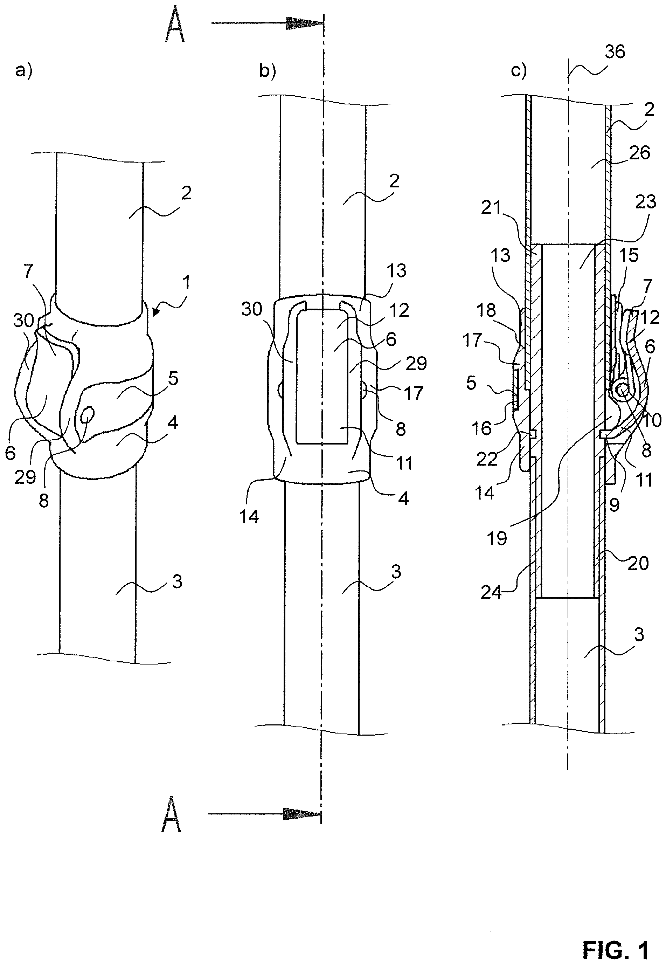

Figur 1 zeigt eine Klemmvorrichtung mit den direkt daran angrenzenden Stockrohren 2 und 3. In Figur 1a) ist eine perspektivische Ansicht dargestellt. Die Klemmvorrichtung 1 verfügt über eine umlaufende Kunststoffmanschette 4, typischerweise aus einem thermoplastischen Kunststoffmaterial in einem Spritzgussverfahren hergestellt. Um die Kunststoffmanschette im mittleren Bereich umlaufend ist ein Metallband 5 angeordnet. Zwischen den freien Enden des Metallbandes, die jeweils von einer Achse 8 durchtreten werden, sind zwei Vorsprünge 29 und 30 an der Kunststoffmanschette angeformt, die in radialer Richtung abstehen und dazwischen Freiraum für einen Klemmhebel 6, typischerweise aus Metall, bilden. Der Klemmhebel 6 verfügt im oberen Bereich, das heisst im dem Aussenrohr mit grösserem Durchmesser 2 zugewandten Bereich, über einen Druckbereich 7, und greift mit dem unteren Bereich in formschlüssiger Art in das innere Stockrohr 3 oder ein daran angeordnetes Element ein, um die relative axiale Position der beiden Rohre 2, 3 festzulegen.

In Figur 1b) ist dargestellt, wie die Kunststoffmanschette über einen oberen Bereich 13, einen mittleren Bereich 17, in welchem das Metallband 5 angeordnet ist, und einen unteren Bereich 14, der dem Innenrohr 3 zugewandt ist, verfügt. Der obere Bereich 13 bildet gewissermassen eine Aufnahmeöffnung für das freie Ende des Aussenrohres 2, und der untere Bereich 14 dient als Aufnahmeöffnung für das Innenrohr 3. Das Aussenrohr 2 ist an der Kunststoffmanschette befestigt. Dies wird aus der Schnittdarstellung in Figur 1c) ersichtlich. Das freie Ende des Aussenrohrs greift in einen Bereich 18 mit erweitertem Durchmesser der Kunststoffmanschette 4 ein und ist in diesem formschlüssig und/oder kraftschlüssig und/oder stoffschlüssig befestigt. In einem mit etwas erweitertem Aussendurchmesser ausgestalteten mittleren Bereich 17 der Manschette gibt es aussenseitig eine umlaufende Vertiefung 16, in welcher das Metallband 5 im umlaufenden Bereich angeordnet ist.

Der Klemmhebel 6 ist im wesentlichen L-förmig, wobei der obere vertikale Bereich ganz oben von aussen über einen Druckbereich 7 betätigt werden kann. Dieser Bereich kann auch leicht von aussen konkav ausgestaltet sein. Der Hebel verfügt über einen oberen Hebelarm 12 und einen unteren Hebelarm 11, dazwischen liegt die Achse 8.

Der untere Hebelarm 11 bildet an seinem radial inneren freien Ende einen Klemmvorsprung 9, der formschlüssig und selbsteinrastend in eine umlaufende Nut 22 eines Führungseinschubs 20, der am Innenrohr 3 befestigt ist, eingreift.

Der Hebel 6 ist mit einer Spiralfeder gegen die Manschette verspannt, so dass er in der eingerasteten Position, wie in Figur 1c dargestellt, verbleibt. Die Spiralfeder 10 umgreift mit ihrem Spiralbereich den Achsstift 8 (meist aus Metall), und einer der Schenkel der Feder liegt auf der Innenseite des oberen Hebelarms 12 an, und der andere, in der Figur links dargestellte Schenkel liegt auf der Aussenfläche des oberen Manschettenbereiches 13, gewissermassen hinter dem Hebel 6, an.

Zwischen der Aussenwand des oberen Bereiches 13 und dem Bereich 7 des Hebels 6 verbleibt so ein Zwischenraum 15. Wird beispielsweise mit dem Finger auf den Bereich 7 gepresst, so verschwenkt sich der Hebel in der in der Figur dargestellten Situation im Gegenuhrzeigersinn um einige Grad, wobei der Klemmvorsprung 9 aus der Nut 22 in radialer Richtung herausgezogen wird und die vorher festgelegte axiale Position zwischen den beiden Rohren 3 freigegeben wird. Der untere Hebelarm 11 greift durch eine Durchgangsöffnung 19 im mittleren respektive unteren Bereich der Klemmmanschette hindurch, um diesen Formschluss bereitstellen zu können.

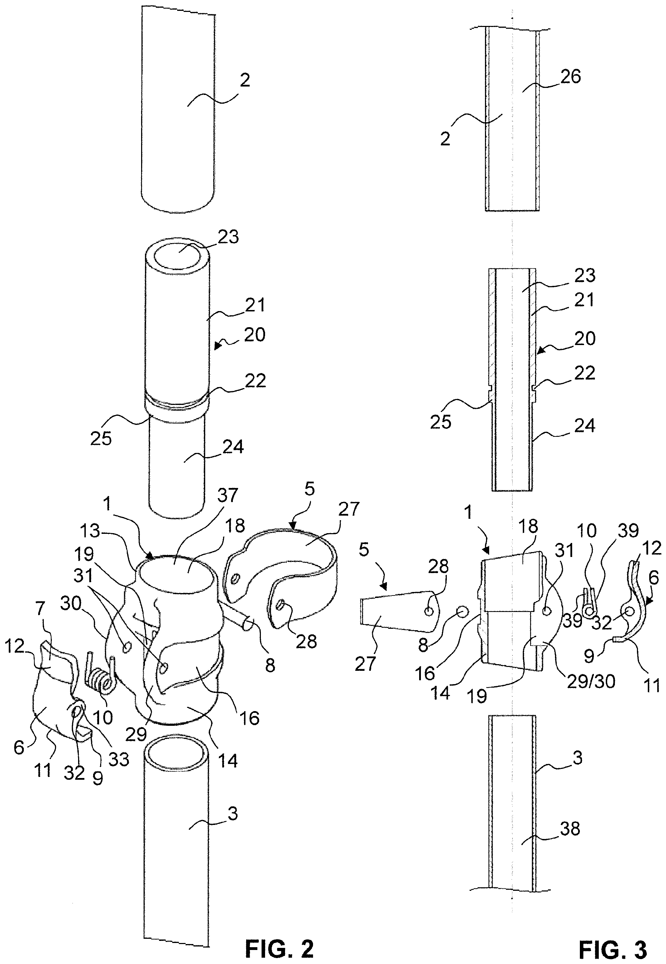

In Figur 2 ist die gleiche Klemmvorrichtung in einer Explosionsdarstellung angegeben. Hier sind die einzelnen Elemente in ihrer Form und Strukturgebung erkennbar. Insbesondere kann beim Hebel 6 erkannt werden, wie er in einem mittleren Bereich über jeweils zwei zum Rohr hingewandte umgelegte Bereiche 33 verfügt, in welchen Durchgangsöffnungen 32 für die Achse 8 vorhanden sind. Ebenso sind in der Darstellung die Durchgangsöffnungen 31 für die Achse in den beiden Vorsprüngen 29 und 30 erkennbar sowie die gewissermassen zwischen diesen Vorsprüngen und unterhalb der Achse vorhandene Durchgangsöffnung 19 für den unteren Hebelarm 11 und den formschlüssigen Eingriff in die Nut 22.

In Figur 3 sind die Elemente gemäss Figur 2 in einer Schnittdarstellung wiedergegeben, hier kann insbesondere gut erkannt werden, wie die Rückstellfeder 10 über zwei Schenkel 39 verfügt, die beim Lösen des Klemmmechanismus gegeneinander gedrückt werden müssen, und entsprechend eine Rückstellkraft im Uhrzeigersinn bereitstellen.

Durch diese Federbeaufschlagung ist der Klemmmechanismus selbsteinrastend.

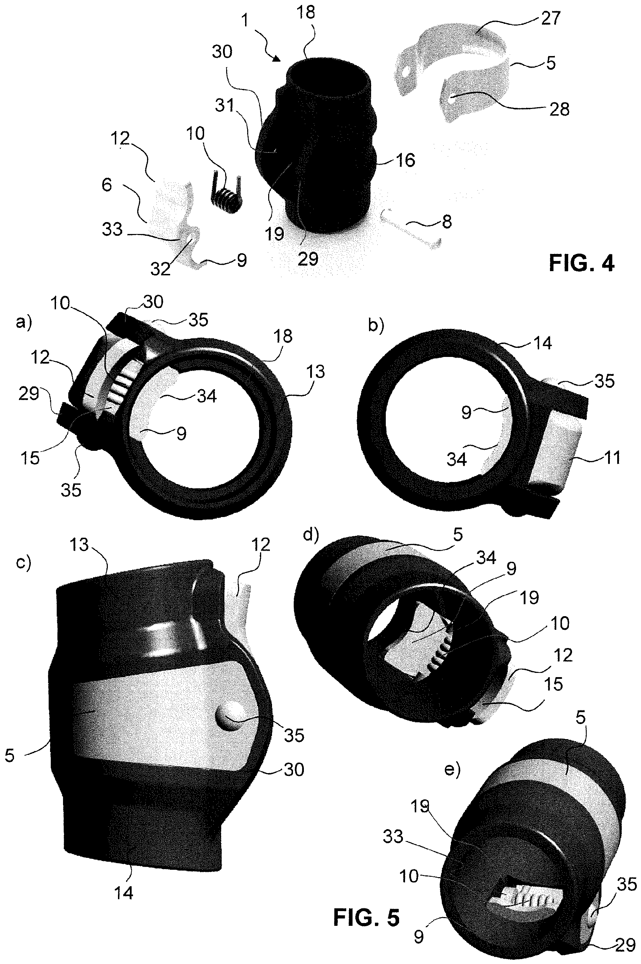

In Figur 4 ist eine ähnliche Explosionsdarstellung perspektivisch und ohne Rohrabschnitte respektive Führungseinschub dargestellt, hier kann vor allem erkannt werden, wie die Innenfläche 27 des Metallbandes 5 in die umlaufende Vertiefung 16 eingreift und in Anlage kommt mit dem thermoplastischen Bauteil der Kunststoffmanschette. Die Metallband-Struktur liegt gewissermassen über ihre ganze Läge in einer Vertiefung, sodass das Metallband nicht über die Oberfläche des Kunststoffteils hervorsteht.

Zu guter Letzt ist die Klemmmanschette in Figur 5 in verschiedenen Darstellungen wiedergegeben, in a) in einer Ansicht von oben, in b) in einer Ansicht von unten, in c) in einer Seitenansicht, in d) in einer perspektivischen Ansicht von oben in die Durchgangsöffnung hinein, und in e) in einer perspektivischen Ansicht ebenfalls in die Durchgangsöffnung hinein aber von unten.

Anhand dieser Darstellungen kann insbesondere erkannt werden, wie der radial nach innen gewandte Kantenbereich des Klemmvorsprungs 9 vorzugsweise als gekrümmter Bereich 34 ausgebildet ist. Da die Nut, wie beispielsweise aus Figur 3 ersichtlich, als umlaufende Nut 22 im Führungseinschub 20 ausgebildet ist, wird so sichergestellt, dass über einen möglichst grossen Umfangbereich die vordere Kante des Klemmvorsprungs 9 in dieser Nut liegt und die Auflagekräfte entsprechend über einen möglichst grossen Bereich verteilt werden können.

### BEZUGSZEICHENLISTE

| | | | |
|---|---|---|---|
| 1 | Klemmvorrichtung | 21 | über 3 hervorstehender Bereich von 20 |
| 2 | Stockrohr mit grösserem | | |
| | Durchmesser, Aussenrohr | 22 | Klemmnut in 21 |
| 3 | Stockrohr mit kleineren Durchmesser, Innenrohr | 23 | axiale Durchgangsöffnung in 20 |
| 4 | umlaufende Kunststoffmanschette von 1 | 24 | Bereich mit reduziertem Durchmesser für 3 in 20, Steckbereich in 3 |
| 5 | umlaufendes Metallband | | |
| 6 | Klemmhebel | 25 | Schulter für 3 |
| 7 | Druckbereich von 6 | 26 | Innenraum von 2 |
| 8 | Achse von 6 | 27 | Innenfläche von 5 |
| 9 | Klemmvorsprung von 6 | 28 | Durchgangsöffnung für 8 in 5 |
| 10 | Rückstellfeder von 6 | 29 | erster Vorsprung |
| 11 | unterer Hebelarm von 6 | 30 | zweiter Vorsprung |
| 12 | oberer Hebelarm von 6 | 31 | Durchgangsöffnung in 29/30 für 8 |
| 13 | oberer Bereich von 4 | | |
| 14 | unterer Bereich von 4 | 32 | Durchgangsöffnung in 6 für 8 |
| 15 | Zwischenraum zwischen 11 und 13 | 33 | umgelegter Bereich für 32 von 6 |
| 16 | umlaufende Vertiefung in 17 für 5 | 34 | gekrümmter Bereich von 9 |
| | | 35 | Abschlusskopf von 8 |
| 17 | mittlerer Bereich von 4 | 36 | Stockachse |
| 18 | Bereich mit erweitertem Durchmesser für 2 in 4 | 37 | axiale Durchgangsöffnung in 1 für Stockrohre |
| 19 | radiale Durchgangsöffnung für 9/11 in 4 | 38 | Innenraum von 3 |
| | | 39 | Schenkel von 10 |
| 20 | Führungseinschub in 3 | | |

## Patentansprüche

1. Wanderstock, Trekkingstock, Nordic Walking-Stock, Langlaufstock oder Skistock mit einem Aussenrohr (2) und einem in dieses einschiebbares Innenrohr (3) und mit einer Klemmvorrichtung (1) zur formschlüssigen lösbaren axialen Festlegung eines in eine Öffnung der an dem Aussenrohr (2) befestigten Klemmvorrichtung einschiebbaren Innenrohrabschnittes (3),
wobei die Klemmvorrichtung (1) eine umlaufende Kunststoffmanschette (4) aufweist, an welcher aussenseitig ein Klemmhebel (6) über eine Achse (8), welche senkrecht zur Stockachse (36) angeordnet ist, kippbar gegen die Rückstellkraft eines Federelements (10) angeachst ist,
wobei die Kunststoffmanschette (4) zwei Vorsprünge (29,30) mit Durchtrittsöffnungen (31) und/oder Ausnehmungen für die Achse (8) aufweist, und der Klemmhebel (6) zwischen diesen Vorsprüngen kippbar um die Achse (8) gelagert ist, und wobei die Kunststoffmanschette (4) eine radiale Durchgangsöffnung (19) aufweist,
wobei der Klemmhebel (6) einen ersten Hebelarm (12) mit einem von aussen zugänglichen Druckbereich (7) zum Lösen der Klemmvorrichtung (1) aufweist und einen auf der anderen Seite der Achse (8) angeordneten zweiten Hebelarm (11), wobei der zweite Hebelarm (11) einen im wesentlichen radial zur Stockachse (36) angeordneten Klemmvorsprung (9) aufweist, welcher durch die radiale Durchgangsöffnung (19) in der Kunststoffmanschette (4) in eine axiale Durchgangsöffnung (37) der Kunststoffmanschette eingreift und formschlüssig in eine Nut (22) des Innenrohres (3) oder eines mit dem Innenohr verbundenen Führungseinschubs (20) für die axiale Festlegung der beiden Rohre (2, 3) eingreift, und
wobei der erste Hebelarm (12) mit dem von aussen zugänglichen Druckbereich (7) zum Lösen der Klemmvorrichtung (1) und der auf der anderen Seite der Achse (8) angeordnete zweite Hebelarm (11) des Klemmhebels (6) einstückig und starr ausgebildet sind.

2. Stock mit Klemmvorrichtung nach Anspruch 1, **dadurch gekennzeichnet, dass** die Klemmvorrichtung weiter ein umlaufendes Metallband (5) aufweist, welches jeweils auf der Aussenseite der zwei Vorsprünge (29, 30), jeweils mit einer Durchgangsöffnung (28) für die Achse (8), angeordnet ist und den den Vorsprüngen abgewandten Umfang der Klemmmanschette umlaufend angeordnet ist.

3. Stock mit Klemmvorrichtung nach Anspruch 2, **dadurch gekennzeichnet, dass** das Metallband in einer Vertiefung (16), vorzugsweise in einer umlaufenden Vertiefung (16) der Kunststoffmanschette (4) angeordnet ist.

4. Stock mit Klemmvorrichtung nach einem der Ansprüche 2 oder 3, **dadurch gekennzeichnet, dass** das Metallband eine Breite, parallel zur Stockachse (36), wenigstens im Umlaufbereich im Bereich von 4-15 mm, oder im Bereich von 5-10 mm aufweist
und/oder das Metallband aus rostfreiem Stahl besteht.

5. Stock mit Klemmvorrichtung nach einem der vorhergehenden Ansprüche, **dadurch gekennzeichnet, dass** der Klemmhebel (6) in Blickrichtung der Achse (8) ein im wesentlichen L-förmiges Profil aufweist, dessen unterer horizontaler Schenkel mit seinem freiliegenden Ende den Klemmvorsprung (9) bildet, und dessen oberer vertikaler Schenkel den Druckbereich (7) bereitstellt, wobei vorzugsweise an den beiden den Vorsprüngen (29, 30) zugewandten Randbereichen zum Rohr (2/3) umgelegte Bereiche (33) vorgesehen sind, welche jeweils eine Durchgangsöffnung (32) für die Achse (8) aufweisen, und welche im Wesentlichen parallel zur Hauptverlaufsrichtung der Vorsprünge (29, 30) verlaufen,
und/oder dass der Klemmhebel (6) streifenförmig ausgebildet ist mit einer Breite entlang der Achse (8) von wenigstens 2 mm, oder wenigstens 4 mm, oder im Bereich von 4-12 mm.

6. Stock mit Klemmvorrichtung nach einem der vorhergehenden Ansprüche, **dadurch gekennzeichnet, dass** der zweite Hebelarm (11) einen im Wesentlichen radial zur Stockachse (36) angeordneten, streifenförmigen Klemmvorsprung (9) aufweist, welcher durch die radiale längliche Durchgangsöffnung (19) in der Kunststoffmanschette (4) in eine axiale Durchgangsöffnung (37) der Kunststoffmanschette eingreift und formschlüssig in eine teilweise umlaufende Nut (22) des Innenrohres (3) oder eines mit dem Innenohr verbundenen Führungseinschubs (20) für die axiale Festlegung der beiden Rohre (2, 3) eingreift.

7. Stock mit Klemmvorrichtung nach einem der vorhergehenden Ansprüche, **dadurch gekennzeichnet, dass** der Klemmvorsprung (9) einen gekrümmten Bereich (34) aufweist, vorzugsweise mit einer im wesentlichen kreisbogenförmigen Kontur, angepasst an den Durchmesser der Nut (22).

8. Stock mit Klemmvorrichtung nach einem der vorhergehenden Ansprüche, **dadurch gekennzeichnet**, der Klemmvorsprung (9) eine Breite, senkrecht zur Stockachse (36), im Bereich von 2-10 mm, oder im Bereich von 3-7 mm aufweist.

9. Stock mit Klemmvorrichtung nach einem der vorhergehenden Ansprüche, **dadurch gekennzeichnet, dass** der Klemmhebel (6) eine Breite, senkrecht zur Stockachse (36), im Bereich von 4-15 mm, oder im Bereich von 8-12 mm aufweist.

10. Stock mit Klemmvorrichtung nach einem der vorhergehenden Ansprüche, **dadurch gekennzeichnet, dass** die Rückstellkraft des Klemmhebels über ein Federelement in Form einer Spiralfeder (10) mit zwei Schenkeln (39) bereitgestellt wird, wobei vorzugsweise die Achse (8) durch die Öffnung des Spiralbereichs des Federelements (10) hindurchtritt, und ein erster Schenkel auf einer Aussenfläche der Kunststoffmanschette (4) und ein zweiter Schenkel auf einer Innenfläche des Klemmhebels (6) anliegt, vorzugsweise auf der dem Druckbereich (7) gegenüberliegenden Innenfläche des Klemmhebels (6).

11. Stock mit Klemmvorrichtung nach einem der vorhergehenden Ansprüche, **dadurch gekennzeichnet, dass** ein am Innenohr (3) befestigter Führungseinschub (20) vorgesehen ist, der mit einem ersten Bereich (24) in einen Innenraum (38) des Innenrohres (3) eingreift und in diesem befestigt ist, und der mit einem zweiten Bereich (21) über das Ende des Innenrohres (3) hervorsteht und in den Innenraum (26) des Aussenrohres (2) eingreift.

12. Stock mit Klemmvorrichtung nach Anspruch 11,
**dadurch gekennzeichnet, dass**
der Aussendurchmesser des zweiten Bereichs (21) im wesentlichen gleich oder nur unwesentlich geringer ist als der Innendurchmesser des Innenraums (26) des Aussenrohres (2), und wobei im dem Innenohr (3) zugewandten Drittel oder Viertel des zweiten Bereichs (21) wenigstens eine bevorzugt umlaufende Nut (22) für den Klemmvorsprung (9) vorgesehen ist.

13. Stock mit Klemmvorrichtung nach Anspruch 1, **dadurch gekennzeichnet, dass** der Klemmhebel (6) als Ganzes einstückig aus einem Kunststoffmaterial, vorzugsweise mit Faserverstärkung, gespritzt ist oder aus Metall besteht und aus einem Blechabschnitt gestanzt und umgeformt oder als Druckgussteil ausgebildet ist.

14. Stock mit mit Klemmvorrichtung nach einem der vorhergehenden Ansprüche wobei der Stock wenigstens ein Aussenrohr (2) mit daran befestigter Klemmvorrichtung und wenigstens ein Innenrohr (3) aufweist, sowie zusätzlich einen am Aussenrohr befestigten Handgriff und bevorzugt am Innenrohr (3) oder an einem mit diesem direkt oder indirekt verbundenen weiteren Rohrabschnitt mit gleichem oder geringerem Durchmesser als das Innenrohr (3) eine Stockspitze.

15. Stock nach Anspruch 14, **dadurch gekennzeichnet, dass** es sich um einen Faltstock mit wenigstens drei, vorzugsweise wenigstens vier Rohrabschnitten handelt, wobei die Rohrabschnitte im zusammengesetzten Zustand des Faltstockes über Steckverbindungen entlang der Stockachse (36) ausgerichtet miteinander verbunden sind, und wenigstens zwei Rohrabschnitte im zusammengefalteten Zustand nur noch über ein bewegliches Verbindungselement miteinander verbunden sind, und wobei an einem obersten Rohrabschnitt ein Stockgriff angeordnet ist und an einem untersten Rohrabschnitt eine Stockspitze angeordnet ist,
wobei eine der Steckverbindungen über den Klemmmechanismus (1) realisiert ist,
wobei der Klemmmechanismus (1) an einem ersten Rohrabschnitt (2) befestigt ist, und bei welchem ein zweiter Rohrabschnitt (3), der über einen geringeren oder nahezu gleichen Außendurchmesser verfügt wie der Innendurchmesser des ersten Rohrabschnitts (2), und der im ersten Rohrabschnitt (2) an sich verschieblich gelagert ist, in der relativen axialen Position durch den außen liegenden Klemmmechanismus (1) fixiert werden kann,
und wobei die weiteren Steckverbindungen als reine Steckverbindungen ausgebildet sind, bei welchen Rohrabschnitte in zusammen gestecktem Zustand nur in einer axialen Richtung fixiert sind,
wobei die Rohrabschnitte über wenigstens ein Zugseil miteinander verbunden sind, welches am untersten Rohrabschnitt befestigt ist und am obersten Rohrabschnitt (2) befestigt ist und durch den Innenraum (26,38) der wenigstens zwei mittleren Rohrabschnitte verlaufend angeordnet ist,
und dass der Faltstock (1) derart ausgebildet ist, dass er vom zusammengefalteten Zustand in den zusammengesetzten Zustand übergeführt werden kann, indem die weiteren Steckverbindungen zusammen gesteckt werden, und indem anschließend bei gelöstem Klemmmechanismus (1) der zweite Rohrabschnitt (3) so weit aus dem ersten Rohrabschnitt (2) herausgezogen wird, bis das Zugseil (16) unter Spannung ist, und indem der außen liegende Klemmmechanismus (1) bevorzugt selbsteinrastend fixiert wird.

## Claims

1. Walking pole, trekking pole, Nordic walking pole, cross-country skiing pole or ski pole with an outer tube (2) and an inner tube (3) which can be shifted into the outer tube (2) and with a clamping device (1) for positive-locking, detachable axial fixing of an inner tube portion (3) which can be pushed into an opening of the clamping device fastened to the outer tube (2),
wherein the clamping device (1) has a circumferential plastic sleeve (4) on which a clamping lever (6) is articulated tiltably against the restoring force of a spring element (10) on the outside via an axis (8) which is arranged perpendicular to the pole axis (36),
wherein the plastic sleeve (4) has two projections (29, 30) with through-openings (31) and/or recesses for the axis (8), and the clamping lever (6) is mounted between these projections tiltably about the axis (8), and wherein the plastic sleeve (4) has a radial passage opening (19),
wherein the clamping lever (6) has a first lever arm (12) with a pressure region (7), which is accessible from the outside, for releasing the clamping device (1) and a second lever arm (11) which is arranged on the other side of the axis (8), wherein the second lever arm (11) has a clamping projection (9) arranged substantially radially with respect to the pole axis (36), which clamping projection (9) engages through the radial passage opening (19) in the plastic sleeve (4) into an axial passage opening (37) of the plastic sleeve and engages in a positive-locking manner into a groove (22) of the inner tube (3) or of a guide insert (20) connected to the inner tube for the axial fixing of the two tubes (2, 3), and
wherein the first lever arm (12) with the pressure region (7) which is accessible from the outside for release of the clamping device (1) and the second lever arm (11) of the clamping lever (6) arranged on the other side of the axis (8) are formed in one piece and rigidly.

2. Pole with a clamping device as claimed in claim 1, **characterized in that** the clamping device further has a circumferential metal band (5) which is arranged in each case on the outside of the two projections (29, 30), in each case with a passage opening (28) for the axis (8), and which is arranged running around the circumference, which faces away from the projections, of the clamping sleeve.

3. Pole with a clamping device as claimed in claim 2, **characterized in that** the metal band is arranged in a depression (16), preferably in a circumferential depression (16) of the plastic sleeve (4).

4. Pole with a clamping device as claimed in any one of claims 2 or 3, **characterized in that** the metal band has a width, parallel to the pole axis (36), at least in the circumferential region in the range of 4-15 mm, or in the range of 5-10 mm and/or the metal band is composed of stainless steel.

5. Pole with a clamping device as claimed in any one of the preceding claims, **characterized in that** the clamping lever (6) has, as seen in the direction of the axis (8), a substantially L-shaped profile, the lower horizontal limb of which forms with its exposed end the clamping projection (9), and the upper vertical limb of which provides the pressure region (7), wherein reversed regions (33) on the two edge regions facing the projections (29, 30) toward the tube (2/3) are preferably provided, which regions have in each case a passage opening (32) for the axis (8) and which run substantially parallel to the main running direction of the projections (29, 30),
and/or that the clamping lever (6) is formed to be strip-shaped with a width along the axis (8) of at least 2 mm, or at least 4 mm, or in the range of 4-12 mm.

6. Pole with a clamping device as claimed in any one of the preceding claims, **characterized in that** the second lever arm (11) has a strip-shaped clamping projection (9) arranged substantially radially with respect to the pole axis (36), which clamping projection engages through the radial longitudinal passage opening (19) in the plastic sleeve (4) into an axial passage opening (37) of the plastic sleeve and engages in a positive-locking manner in a partially circumferential groove (22) of the inner tube (3) or of a guide insert (20) connected to the inner tube for the axial fixing of the two tubes (2, 3).

7. Pole with a clamping device as claimed in any one of the preceding claims, **characterized in that** the clamping projection (9) has a curved region (34), preferably with a substantially circular arc-shaped contour, adapted to the diameter of the groove (22).

8. Pole with a clamping device as claimed in any one of the preceding claims, **characterized in that** the clamping projection (9) has a width, perpendicular to the pole axis (36), in the range of 2-10 mm, or in the range of 3-7 mm.

9. Pole with a clamping device as claimed in any one of the preceding claims, **characterized in that** the clamping lever (6) has a width, perpendicular to the pole axis (36), in the range of 4-15 mm, or in the range of 8-12 mm.

10. Pole with a clamping device as claimed in any one of the preceding claims, **characterized in that** the restoring force of the clamping lever is provided via a spring element in the form of a spiral spring (10) with two limbs (39), wherein the axis (8) preferably passes through the opening of the spiral region of the spring element (10), and a first limb rests on an outer surface of the plastic sleeve (4) and a second limb rests on the inner surface of the clamping lever (6), preferably on the inner surface of the clamping lever (6) opposite the pressure region (7).

11. Pole with a a guide insert (20) fastened to the inner tube (3) is provided, which guide insert (20) engages with a first region (24) into an inner space (38) of the inner tube (3) and is fastened therein, and which projects with a second region (21) beyond the end of the inner tube (3) and engages in the inner space (26) of the outer tube (2).

12. Pole with a clamping device as claimed in claim 11, **characterized in that** the outer diameter of the second region (21) is preferably substantially equal to or only insignificantly smaller than the inner diameter of the inner space (26) of the outer tube (2), and wherein at least one preferably circumferential groove (22) is provided for the clamping projection (9) in the third or quarter of the second region (21) facing the inner tube (3).

13. Pole with a clamping device as claimed in claim 1, **characterized in that** the clamping lever (6) is injection molded as a whole in one piece from a plastic material, preferably with fiber reinforcement, or consists of a metal and is punched and reshaped from a sheet metal portion or is formed as a pressure die casting.

14. Pole with a clamping device as claimed in any one of the preceding claims, wherein the pole has at least one outer tube (2) with a clamping device fastened thereon and at least one inner tube (3) as well as additionally a handle fastened to the outer tube and preferably a pole tip on the inner tube (3) or on a further tube portion connected directly or indirectly thereto with the same diameter as or a smaller diameter than the inner tube (3).

15. The pole as claimed in claim 14, **characterized in that** this involves a folding pole with at least three, preferably at least four tube portions, wherein the tube portions in the assembled state of the folding pole are connected to one another via plug connections oriented along the pole axis (36), and at least two tube portions (36) in the folded together state are only connected to one another via a movable connection element, and wherein a pole handle is arranged on an uppermost tube portion and a pole tip is arranged on a lowermost tube portion,
wherein one of the plug connections is realized via the clamping mechanism, wherein the clamping mechanism (1) is fastened to a first tube portion (2), and in the case of which a second tube portion (3), which has a smaller or approximately identical outer diameter than/as the inner diameter of the first tube portion (2) and which is displaceably mounted in the first tube portion (2) itself, can be fixed in the relative axial position by the external clamping mechanism (1),
and wherein the further plug connections are formed as pure plug connections, in the case of which tube portions in the pushed together state are only fixed in one axial direction,
wherein the tube portions are connected to one another via at least one load cable, which is fastened to the lowermost tube portion and is fastened to the uppermost tube portion (2) and is arranged running through the inner space (26, 38) of the at least two central tube portions,
and that the folding pole (1) is formed in such a manner that it can be transferred from the folded together state into the assembled state **in that** the further plug connections are plugged together and **in that** subsequently in the case of a detached clamping mechanism (1) the second tube portion (3) can be pulled out of the first tube portion (2) so far until the load cable (16) is under tension and **in that** the external clamping mechanism (1) is preferably fixed in a self-latching manner.

## Revendications

1. Bâton de marche, bâton de trekking, bâton de marche nordique, bâton de ski de fond ou bâton de ski avec un tube extérieur (2) et un tube intérieur (3) qui peut être déplacé dans le tube extérieur (2) et avec un dispositif de serrage (1) pour la fixation axiale positive et amovible d'une partie du tube intérieur (3) qui peut être poussée dans une ouverture du dispositif de serrage fixé au tube extérieur (2),
dans lequel le dispositif de serrage (1) possède un manchon périphérique en plastique (4) sur lequel un levier de serrage (6) est articulé de manière inclinable contre la force de rappel d'un élément de ressort (10) à l'extérieur via un axe (8) qui est disposé perpendiculairement à l'axe des bâtons (36),
le manchon en plastique (4) présente deux saillies (29, 30) avec des ouvertures traversantes (31) et/ou des évidements pour l'axe (8), et le levier de serrage (6) est monté entre ces saillies de manière inclinable autour de l'axe (8), et le manchon en plastique (4) présente une ouverture de passage radiale (19),
le levier de serrage (6) comporte un premier bras de levier (12) avec une zone de pression (7) accessible de l'extérieur pour libérer le dispositif de serrage (1) et un deuxième bras de levier (11) disposé de l'autre côté de l'axe (8), le deuxième bras de levier (11) comportant une saillie de serrage (9) disposée sensiblement radialement par rapport à l'axe des pôles (36), cette saillie de serrage (9) s'engage à travers l'ouverture de passage radial (19) dans le manchon en plastique (4) dans une ouverture de passage axial (37) du manchon en plastique et s'engage de manière positive dans une rainure (22) du tube intérieur (3) ou d'un insert de guidage (20) relié au tube intérieur pour la fixation axiale des deux tubes (2, 3), et
le premier bras de levier (12) avec la zone de pression (7) accessible de l'extérieur pour libérer le dispositif de serrage (1) et le deuxième bras de levier (11) du levier de serrage (6) disposé de l'autre côté de l'axe (8) sont formés d'une seule pièce et sont rigides.

2. Bâton avec dispositif de serrage selon la revendication 1, **caractérisé en ce que** le dispositif de serrage comporte en outre une bande métallique périphérique (5) qui est disposée dans chaque cas à l'extérieur des deux saillies (29, 30), dans chaque cas avec une ouverture de passage (28) pour l'axe (8), et qui est disposée tout autour de la circonférence, qui est opposée aux saillies, de la douille de serrage.

3. Bâton avec dispositif de serrage selon la revendication 2, **caractérisée par le fait que** la bande métallique est disposée dans une dépression (16), de préférence dans une dépression circonférentielle (16) de la gaine en plastique (4).

4. Bâton avec dispositif de serrage selon l'une des revendications 2 ou 3, **caractérisée par le fait que** la bande métallique a une largeur, parallèle à l'axe du bâton (36), au moins dans la zone circonférentielle de l'ordre de 4 à 15 mm, ou de l'ordre de 5 à 10 mm et/ou que la bande métallique est composée d'acier inoxydable.

5. Bâton avec dispositif de serrage selon l'une quelconque des revendications précédentes, **caractérisée en ce que** le levier de serrage (6) présente, vu en direction de l'axe (8), un profil sensiblement en forme de L, dont la branche horizontale inférieure forme avec son extrémité exposée la saillie de serrage (9), et dont la branche verticale supérieure constitue la zone de pression (7), dans lequel il est préférable de prévoir des zones inversées (33) sur les deux zones de bord faisant face aux saillies (29, 30) vers le tube (2/3), zones qui présentent chacune une ouverture de passage (32) pour l'axe (8) et qui sont sensiblement parallèles à la direction principale de déplacement des saillies (29, 30),
et/ou que le levier de serrage (6) a la forme d'une bande dont la largeur le long de l'axe (8) est d'au moins 2 mm, ou d'au moins 4 mm, ou de l'ordre de 4 à 12 mm..

6. Bâton avec dispositif de serrage selon l'une quelconque des revendications précédentes, **caractérisée en ce que** le deuxième bras de levier (11) présente une saillie de serrage en forme de bande (9) disposée sensiblement radialement par rapport à l'axe du bâton (36), Cette saillie de serrage s'engage à travers l'ouverture de passage longitudinale radiale (19) dans le manchon en plastique (4) dans une ouverture de passage axiale (37) du manchon en plastique et s'engage de manière positive dans une rainure partiellement circonférentielle (22) du tube intérieur (3) ou d'un insert de guidage (20) relié au tube intérieur pour la fixation axiale des deux tubes (2, 3).

7. Bâton avec un dispositif de serrage selon l'une quelconque des revendications précédentes, **caractérisée par le fait que** la saillie de serrage (9) présente une zone incurvée (34), de préférence avec un contour en arc de cercle, adaptée au diamètre de la rainure (22).

8. Bâton avec dispositif de serrage selon l'une quelconque des revendications précédentes, **caractérisée par le fait que** la saillie de serrage (9) a une largeur, perpendiculaire à l'axe du bâton (36), de l'ordre de 2 à 10 mm, ou de l'ordre de 3 à 7 mm.

9. Bâton avec dispositif de serrage selon l'une quelconque des revendications précédentes, **caractérisée en ce que** le levier de serrage (6) a une largeur, perpendiculaire à l'axe du bâton (36), de l'ordre de 4 à 15 mm, ou de l'ordre de 8 à 12 mm.

10. Bâton avec dispositif de serrage selon l'une quelconque des revendications précédentes, **caractérisée par le fait que** la force de rappel du levier de serrage est fournie par un élément élastique sous la forme d'un ressort en spirale (10) à deux branches (39), dans lequel l'axe (8) passe de préférence par l'ouverture de la zone en spirale de l'élément élastique (10), et une première branche repose sur une surface extérieure de la douille en plastique (4) et une deuxième branche repose sur la surface intérieure du levier de serrage (6), de préférence sur la surface intérieure du levier de serrage (6) opposée à la zone de pression (7).

11. Bâton avec un insert de guidage (20) fixé au tube intérieur (3) est fourni, lequel insert de guidage (20) s'engage avec une première région (24) dans un espace intérieur (38) du tube intérieur (3) et y est fixé, et qui fait saillie avec une deuxième région (21) au-delà de l'extrémité du tube intérieur (3) et s'engage dans l'espace intérieur (26) du tube extérieur (2).

12. Bâton avec dispositif de serrage selon la revendication 11, **caractérisé en ce que** le diamètre extérieur de la deuxième région (21) est de préférence sensiblement égal ou à peine inférieur au diamètre intérieur de l'espace intérieur (26) du tube extérieur (2), et dans lequel au moins une rainure de préférence circonférentielle (22) est prévue pour la saillie de serrage (9) dans le troisième ou le quart de la deuxième région (21) faisant face au tube intérieur (3).

13. Bâton avec dispositif de serrage selon la revendication 1, **caractérisée par le fait que** le levier de serrage (6) est moulé par injection en une seule pièce à partir d'une matière plastique, de préférence avec un renfort en fibres, ou est constitué d'un métal et est poinçonné et remodelé à partir d'une portion de tôle ou est formé comme une pièce moulée sous pression.

14. Bâton avec dispositif de serrage selon l'une quelconque des revendications précédentes, dans laquelle le bâton comporte au moins un tube extérieur (2) sur lequel est fixé un dispositif de serrage et au moins un tube intérieur (3), ainsi qu'une poignée fixée au tube extérieur et, de préférence, une pointe de bâton sur le tube intérieur (3) ou sur une autre portion de tube reliée directement ou indirectement à celui-ci, d'un diamètre égal ou inférieur à celui du tube intérieur (3).

15. Bâton selon la revendication 14, **caractérisée en ce qu'**il s'agit d'un le bâton pliant avec au moins trois, de préférence au moins quatre parties de tube, dans laquelle les parties de tube à l'état assemblé du bâton pliant sont reliées l'une à l'autre par des connexions enfichables orientées le long de l'axe du bâton (36), et au moins deux parties de tube (36) à l'état replié ne sont reliées l'une à l'autre que par un élément de connexion mobile, et dans laquelle une poignée de bâton est disposée sur une partie de tube supérieure et une pointe de bâton est disposée sur une partie de tube inférieure,
dans lequel l'un des raccordements est réalisé par le mécanisme de serrage, dans lequel le mécanisme de serrage (1) est fixé à une première partie de tube (2), et dans lequel une deuxième partie de tube (3), dont le diamètre extérieur est inférieur ou à peu près identique au diamètre intérieur de la première partie de tube (2) et qui est montée de manière mobile dans la première partie de tube (2) elle-même, peut être fixée dans la position axiale relative par le mécanisme de serrage externe (1),
et dans lequel les autres raccords à fiches sont formés comme des raccords à fiches purs, dans le cas desquels les portions de tube à l'état emboîté ne sont fixées que dans une direction axiale,
dans lequel les portions de tube sont reliées entre elles par au moins un câble de charge fixé à la portion de tube la plus basse et à la portion de tube la plus haute (2) et qui traverse l'espace intérieur (26, 38) des au moins deux portions de tube centrales,
et que le poteau pliant (1) est formé de manière à pouvoir être transféré de l'état plié à l'état assemblé, en ce sens que les autres connexions à fiche sont enfichées ensemble et qu'ensuite, dans le cas d'un mécanisme de serrage détaché (1), la deuxième portion de tube (3) peut être retirée de la première portion de tube (2) jusqu'à ce que le câble de charge (16) soit sous tension, et que le mécanisme de serrage externe (1) est de préférence fixé de manière à s'enclencher automatiquement.
